# EUROPEAN PATENT APPLICATION

(11) **EP 4 321 241 A1**
(43) Date of publication of application: **14.02.2024**
(21) Application number: 22784667.2
(22) Date of filing: 04.04.2022
(51) Int. Cl.: B01D 69/08, B01D 71/62, B01D 71/68, D01F 6/76

(54) **METHOD FOR MANUFACTURING HOLLOW-FIBER MEMBRANE**

(30) Priority: 06.04.2021 JP 2021064677
(71) Applicant: NOK Corporation, Minato-ku Tokyo 105-8585 (JP)
(72) Inventor: ITO, Taiki, Kikugawa-shi, Shizuoka 437-1507 (JP); SANO, Hiroyuki, Fujisawa-shi, Kanagawa 251-0042 (JP)
(74) Representative: Global IP Europe Patentanwaltskanzlei
(86) International application number: PCT/JP2022/017059
(87) International publication number: WO 2022/215685

(57) **Abstract**

The present invention relates to a method for manufacturing a hollow fiber membrane wherein a spinning stock solution containing 10 mass% or more and 40 mass% or less of a polysulfone-based resin, 1 mass% or more and 30 mass% or less of polyvinylpyrrolidone, and 1 mass% or more and 80 mass% or less of N,N-dimethylformamide is discharged together with a core liquid from a double-ring nozzle to produce a hollow fiber membrane by dry-wet spinning, and then the hollow fiber membrane is subjected to a dry heat treatment at a temperature of 80°C or higher and 100°C or lower for 48 hours or longer and 168 hours or shorter.

## Description

### Technical Field

The present invention relates to a method for manufacturing a hollow fiber membrane.

### Background Art

Filtering technology using a porous membrane such as a microfiltration membrane and an ultrafiltration membrane is practically used in various fields such as the medical field, the water purification field, sterilization in the food industry, and manufacturing ultrapure water in the semiconductor industry. For example, a porous membrane used in the water purification field is applied for not only sterilization of service water but also for sterilization and clarification in the sewage field. As the porous membrane used in such fields, polysulfone-based porous membranes such as polysulfone and polyether sulfone, which have excellent heat resistance, chemical resistance, mechanical characteristics, and moldability, are commonly used.

As filtering performance of the porous membrane used in the water purification field, water permeation performance and separation performance are required. The water permeation performance and separation performance are determined by surface structure and internal structure of the membrane, and significantly depend on a method for manufacturing the porous membrane. For example, in Patent Literature 1, it is disclosed that achievement of both virus removal performance and water permeation performance are attempted by regulating the minor axes and major axes of pores within a desired range on a surface of a hollow fiber membrane.

As a method for manufacturing a membrane having excellent water permeation performance and separation performance, a method utilizing phase separation is commonly known. For example, methods utilizing liquid phase separation such as a non-solvent-induced phase separation method described in Patent Literature 2 and a heat-induced phase separation method described in Patent Literature 3 are known.

In such a non-solvent-induced phase separation method and a heat-induced phase separation method, a hydrophobic resin to be a raw material of the hollow fiber membrane, a hydrophilic polymer substance to impart hydrophilicity to the resin, and a spinning stock solution mainly containing a water-soluble organic solvent to dissolve these materials are discharged together with a core liquid from a double-ring nozzle into a coagulation bath, and then a washing treatment is performed to produce the hollow fiber membrane. However, since a certain amount of the organic solvent is contained in the spinning stock solution in these methods for producing membrane, there is a risk that the organic solvent used remains in the hollow fiber membrane after the membrane production. In particular, when a polysulfone-based resin is used as the resin, it is difficult to completely remove an organic solvent contained inside a skeleton of polysulfone by only washing with water and the like.

For recent water purifier membrane modules, higher cleanness against dissolution of impurities such as an organic solvent has been required. In particular, in NSF Certification as an international standard of a water purifier established as a national standard in major developed countries such as the United States and Europe, dissolution standard of each substance is provided, and a standard with an extremely low concentration of a ppb order is defined. For example, a standard value of N,N-dimethylformamide, which is commonly used as the water-soluble organic solvent of the spinning stock solution in the aforementioned method for producing membrane, is 90 ppb or less, and a standard value of N,N-dimethylacetamide is 2000 ppb or less.

In Patent Literatures 1 to 3, characteristics of the obtained hollow fiber membrane, such as the permeation performance, are disclosed, but the organic solvent component remaining in the hollow fiber membrane is not mentioned. Thus, development of a hollow fiber membrane that further reduces the concentration of the organic solvent remaining in the hollow fiber membrane and that achieves safety at high level is desired.

### Document List

### Patent Literatures

Patent Literature 1: Japanese Patent Application Publication No. 2014-073487
Patent Literature 2: Japanese Patent Application Publication No. 2017-051880
Patent Literature 3: Japanese Patent Application Publication No. 2013-144264

### Summary of Invention

### Technical Problem

The present invention provides a method for manufacturing a hollow fiber membrane having high safety in which the organic solvent remaining in the hollow fiber membrane is reduced.

### Solution to Problem

In a method for manufacturing a hollow fiber membrane according to an aspect of the present invention, a spinning stock solution containing 10 mass% or more and 40 mass% or less of a polysulfone-based resin, 1 mass% or more and 30 mass% or less of polyvinylpyrrolidone, and 1 mass% or more and 80 mass% or less of N,N-dimethylformamide is discharged together with a core liquid from a double-ring nozzle to produce a hollow fiber membrane by dry-wet spinning, and then the hollow fiber membrane is subjected to a dry heat treatment at a temperature of 80°C or higher and 100°C or lower for 48 hours or longer and 168 hours or shorter.

In one aspect of the present invention, the core liquid contains 30 mass% or more and 100 mass% or less of N,N-dimethylformamide.

In one aspect of the present invention, the polysulfone-based resin is a polysulfone resin.

In one aspect of the present invention, a concentration of N,N-dimethylformamide remaining in the hollow fiber membrane after the dry heat treatment is 10 ppm or less.

In one aspect of the present invention, a concentration of N,N-dimethylformamide dissolved from the hollow fiber membrane immersed in water after the dry heat treatment is 90 ppb or less.

In one aspect of the present invention, the spun hollow fiber membrane is washed with warm water before the dry heat treatment.

### Effects of Invention

The present invention can provide the method for manufacturing the hollow fiber membrane having high safety in which the organic solvent remaining in the hollow fiber membrane is reduced.

### Brief Description of Drawings

[Fig. 1] A graph indicating a relationship between a drying time and a concentration of N,N-dimethylformamide remaining in a hollow fiber membrane, in each of samples produced in Examples.
[Fig. 2] A graph indicating a vapor pressure curve of N,N-dimethylformamide.
[Fig. 3] A graph indicating a relationship between a washing time with water and a concentration of N,N-dimethylformamide dissolved from a hollow fiber membrane.
[Fig. 4] A graph indicating concentrations of N,N-dimethylformamide dissolved from hollow fiber membranes without a dry heat treatment and with the dry heat treatment.

### Description of Embodiments

Hereinafter, the present embodiment will be described in detail. In a method for manufacturing a polysulfone hollow fiber membrane according to the present embodiment, a spinning stock solution containing a polysulfone-based resin, polyvinylpyrrolidone, and N,N-dimethylformamide (hereinafter, referred to as "DMF") at each predetermined amount is discharged together with a core liquid from a double-ring nozzle to produce a hollow fiber membrane by dry-wet spinning, and then the obtained hollow fiber membrane is subjected to a dry heat treatment at a temperature of 80°C or higher and 100°C or lower for 48 hours or longer and 168 hours or shorter. That is, the hollow fiber membrane obtained by the dry-wet spinning is subjected to the heating treatment at the predetermined temperature for the predetermined time to remove DMF remaining in the hollow fiber membrane, and the manufacture of a substantially solvent-free hollow fiber membrane can be achieved. For example, on a surface and inside a skeleton of three-dimensional mesh structure of a hollow fiber membrane formed by a conventional non-solvent-induced phase separation method, a large amount of a water-soluble organic solvent contained in a spinning stock solution remains. In the present embodiment, the hollow fiber membrane in this state is subjected to the dry heat treatment at a temperature higher than or equal to an inflection point of a vapor pressure curve of the used water-soluble organic solvent, and a concentration of the water-soluble organic solvent, namely DMF, remaining in the hollow fiber membrane and further contained inside the skeleton of the hollow fiber membrane can be removed to a ppb order. As a result, the hollow fiber membrane having high safety can be produced in which the concentration of the organic solvent remaining in the hollow fiber membrane is extremely low.

As the polysulfone-based resin, for example, a polysulfone resin, a polyphenyl sulfone resin, a polyether sulfone resin, a polyaryl ether sulfone resin, a bisphenol A-type polysulfone resin, and the like can be mentioned, and a polysulfone resin is preferably used.

As the polysulfone resin, commercial products such as Udel(R) series, manufactured by Solvay Specialty Polymers, and Ultrason(R) S series, manufactured by BASF SE can be used, for example.

A content of the polysulfone-based resin contained in the spinning stock solution is 10 mass% or more and 40 mass% or less, and preferably 12 mass% or more and 25 mass% or less. The blending proportion of the polysulfone-based resin of 10 mass% or more inhibits a decrease in strength of the hollow fiber membrane during the spinning, facilitates formation of the hollow fiber membrane, and enables more certain spinning. Since the blending proportion of the polysulfone-based resin of 40 mass% or less facilitates formation of pores in the hollow fiber membrane, a decrease in water permeation performance can be inhibited.

Into the spinning stock solution containing polysulfone as a spinning (membrane-producing) component, polyvinylpyrrolidone and DMF are further blended.

Polyvinylpyrrolidone is added as a hydrophilic polymer substance. A weight average molecular weight (Mw) of polyvinylpyrrolidone is preferably 1000 or more and 1200000 or less, and more preferably 10000 or more and 120000 or less. As such polyvinylpyrrolidone, commercial products such as "PVP K-30", manufactured by BASF SE, and the like can be mentioned, for example. A content of polyvinylpyrrolidone contained in the spinning stock solution is 1 mass% or more and 30 mass% or less, and preferably 5 mass% or more and 20 mass% or less. The blending proportion of polyvinylpyrrolidone of 1 mass% or more can impart sufficient hydrophilicity to the hollow fiber membrane, prevents shrinkage of the pore sizes in the hollow fiber membrane, and a decrease in the water permeation performance can be inhibited. Since the blending proportion of polyvinylpyrrolidone of 30 mass% or less stabilizes the spinning stock solution, clouding is inhibited and the spinning can be performed more certainly.

DMF is added as a water-soluble organic solvent to dissolve the polysulfone-based resin. A content of DMF contained in the spinning stock solution is not particularly limited, but is preferably 1 mass% or more and 80 mass% or less, and more preferably 50 mass% or more and 75 mass% or less.

The spinning stock solution may further contain water as necessary, and 1 mass% or less, preferably 0.3 mass% or more and 1 mass% or less, of water can be blended.

The hollow fiber membrane is produced by discharging the spinning stock solution containing the aforementioned components together with the core liquid from the double-ring nozzle by the dry-wet spinning. In this time, the core liquid preferably contains 30 mass% or more and 100 mass% or less of DMF. When used as a solution, the core liquid is used as an aqueous solution further containing water. Using DMF at a concentration of 30 mass% or more and 100 mass% or less as the core liquid enables improvement of the water permeation performance of the hollow fiber membrane. The discharged spinning stock solution is coagulated in a coagulation bath such as water, and then washed in a washing bath such as water.

The obtained hollow fiber membrane is subjected to the dry heat treatment at a temperature of 80°C or higher and 100°C or lower for 48 hours or longer and 168 hours or shorter. The dry heat treatment can be performed by using, for example, a precision thermostatic apparatus. In the dry heat treatment, the heating temperature of within a range of 80°C or higher and 100°C or lower and the heating time of 48 hours or longer and 168 hours or shorter can remarkably reduce DMF remaining in the hollow fiber membrane, and can provide the method for manufacturing the hollow fiber membrane having high safety. The spun hollow fiber membrane may be washed with warm water before the dry heat treatment, and in this case, the hollow fiber membrane is washed in a pressurized water at a temperature of 121°C or higher and 125°C or lower for 1 hour or longer and 2 hours or shorter by using an autoclave or the like.

Since DMF is a liquid having a low flash point and a toxicity, the concentration of DMF remaining in the hollow fiber membrane is needed to be reduced as high level as possible. Specifically, a management concentration in Working Environment Measurement Standards is 10 ppm or less, and a dissolution standard value in NSF Certification is provided as 90 ppb or less. Thus, the concentration of DMF remaining in the hollow fiber membrane after the dry heat treatment is preferably 10 ppm or less, and a concentration of DMF dissolved from the hollow fiber membrane immersed in water after the dry heat treatment is preferably 90 ppb or less.

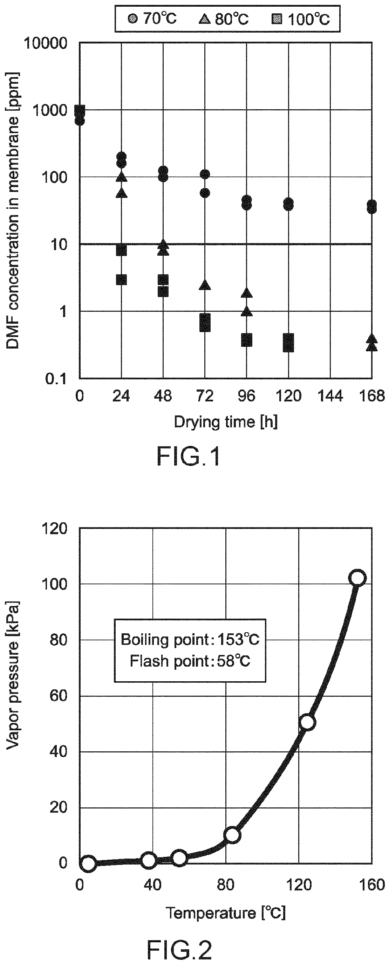

A lower limit value of the heating temperature in the dry heat treatment depends on the temperature at the inflection point of the vapor pressure curve of DMF contained in the spinning stock solution. Fig. 2 is a graph indicating the vapor pressure curve of DMF, and indicates that the temperature at the inflection point is approximately 70°C. Since the heating temperature in the dry heat treatment is 80°C or higher, which is higher than the temperature at the inflection point in the vapor pressure curve of DMF, DMF is easily evaporated and DMF can be reduced to the desired concentration. The heating temperature in the dry heat temperature of 100°C or lower prevents crosslinking of polyvinylpyrrolidone used as the hydrophilic polymer substance, and can inhibit significant change in characteristics of the hollow fiber membrane such as the separation performance and the water permeation performance. The heating time in the dry heat treatment of 48 hours or longer can more certainly reduce DMF to the desired concentration at the temperature equal to or higher than the inflection point in the vapor pressure curve of DMF. Meanwhile, even though the heating time of the dry heat treatment exceeds 168 hours, the concentration of the remaining DMF is constant. Thus, an upper limit value of the heating time of the dry heat treatment is 168 hours or shorter from the viewpoint of efficiency. When the heating temperature in the dry heat treatment is 100°C, DMF can be reduced to the desired concentration even with the heating time of 24 hours or longer.

An average pore diameter of the hollow fiber membrane is not particularly limited, but may be 20 nm or more and 200 nm or less, for example.

The hollow fiber membrane according to the present embodiment has a remarkably low concentration of DMF remaining in the hollow fiber membrane and high safety, and therefore, can be applied for a hollow fiber membrane module for example, and particularly preferably applied for a hollow fiber membrane module for a water purifier.

### EXAMPLES

Hereinafter, Examples of the present invention will be described, but the present invention is not limited to these Examples without departing from the spirit of the present invention. Unless otherwise specified, room temperature is within a range of 20°C±5°C.

### (Example 1)

A spinning stock solution containing 19 mass% of polysulfone ("Ultrason(R) S3010", manufactured by BASF SE), 9 mass% of polyvinylpyrrolidone ("PVP K-30", manufactured by BASF SE), and 72 mass% of DMF was prepared at room temperature.

The obtained spinning stock solution was discharged by using a core liquid containing 60 mass% of DMF and 40 mass% of water from a double-ring nozzle to a water coagulation bath by a dry-wet spinning method to obtain a hollow fiber membrane. Thereafter, the obtained hollow fiber membrane was subjected to a dry heat treatment with a precise thermostatic apparatus ("DFS810", manufactured by Yamato Scientific Co., Ltd.) at 80°C for 48 hours.

The produced hollow fiber membrane was subjected to the following measurement twice. Fig. 1 shows the results.

### <Measurement of DMF Remaining in Hollow Fiber Membrane>

DMF remaining in the hollow fiber membrane was measured by using a GC-MS (manufactured by SHIMADZU CORPORATION). It was evaluated that a hollow fiber membrane having high safety was obtained when the DMF concentration in the hollow fiber membrane was 10 ppm or less since it satisfies the management concentration in Working Environment Measurement Standards.

### (Example 2)

A hollow fiber membrane was produced and subjected to the above measurement and evaluation in the same manner as in Example 1 except that the heating time was 72 hours in the dry heat treatment. Fig. 1 shows the results. Since the two results of the DMF measurement were same, the corresponding plots in Fig. 1 were duplicated.

### (Example 3)

A hollow fiber membrane was produced and subjected to the above measurement and evaluation in the same manner as in Example 1 except that the heating time was 96 hours in the dry heat treatment. Fig. 1 shows the results.

### (Example 4)

A hollow fiber membrane was produced and subjected to the above measurement and evaluation in the same manner as in Example 1 except that the heating time was 168 hours in the dry heat treatment. Fig. 1 shows the results.

### (Example 5)

A hollow fiber membrane was produced and subjected to the above measurement and evaluation in the same manner as in Example 1 except that the heating temperature was 100°C in the dry heat treatment. Fig. 1 shows the results.

### (Example 6)

A hollow fiber membrane was produced and subjected to the above measurement and evaluation in the same manner as in Example 5 except that the heating time was 72 hours in the dry heat treatment. Fig. 1 shows the results.

### (Example 7)

A hollow fiber membrane was produced and subjected to the above measurement and evaluation in the same manner as in Example 5 except that the heating time was 96 hours in the dry heat treatment. Fig. 1 shows the results.

### (Example 8)

A hollow fiber membrane was produced and subjected to the above measurement and evaluation in the same manner as in Example 5 except that the heating time was 120 hours in the dry heat treatment. Fig. 1 shows the results.

### (Comparative Example 1)

A hollow fiber membrane was produced and subjected to the above measurement and evaluation in the same manner as in Example 1 except that the heating temperature was 70°C and the heating time was 24 hours in the dry heat treatment. Fig. 1 shows the results.

### (Comparative Example 2)

A hollow fiber membrane was produced and subjected to the above measurement and evaluation in the same manner as in Example 1 except that the heating temperature was 70°C and the heating time was 48 hours in the dry heat treatment. Fig. 1 shows the results.

### (Comparative Example 3)

A hollow fiber membrane was produced and subjected to the above measurement and evaluation in the same manner as in Example 1 except that the heating temperature was 70°C and the heating time was 72 hours in the dry heat treatment. Fig. 1 shows the results.

### (Comparative Example 4)

A hollow fiber membrane was produced and subjected to the above measurement and evaluation in the same manner as in Example 1 except that the heating temperature was 70°C and the heating time was 96 hours in the dry heat treatment. Fig. 1 shows the results.

### (Comparative Example 5)

A hollow fiber membrane was produced and subjected to the above measurement and evaluation in the same manner as in Example 1 except that the heating temperature was 70°C and the heating time was 120 hours in the dry heat treatment. Fig. 1 shows the results.

### (Comparative Example 6)

A hollow fiber membrane was produced and subjected to the above measurement and evaluation in the same manner as in Example 1 except that the heating temperature was 70°C and the heating time was 168 hours in the dry heat treatment. Fig. 1 shows the results.

### (Reference Example 1)

The hollow fiber membrane after the spinning without the dry heat treatment was subjected to the above measurement and evaluation. Fig. 1 shows the results. For convenience, Fig. 1 shows DMF concentration with heated at each heating temperature (70°C, 80°C, or 100°C) for 0 hours.

### (Reference Example 2)

A hollow fiber membrane was produced and subjected to the above measurement and evaluation in the same manner as in Example 1 except that the heating temperature was 100°C and the heating time was 24 hours in the dry heat treatment. Fig. 1 shows the results.

As shown in Fig. 1, with the hollow fiber membrane produced by using the spinning stock solution containing the predetermined components and subjected to the dry heat treatment at a temperature of 80°C or higher and 100°C or lower for 48 hours or longer and 168 hours or shorter, the concentration of DMF remaining in the hollow fiber membrane was reduced to 10 ppm or less. Therefore, according to the manufacturing method of Examples 1 to 8, the hollow fiber membrane having high safety was able to be produced in which the organic solvent remaining in the hollow fiber membrane was reduced. In particular, it was confirmed that a higher dry heat temperature furthermore enhanced the effect of removing DMF.

Meanwhile, since the heating temperature in the dry heat treatment was lower than 80°C in Comparative Examples 1 to 6, the remaining DMF was failed to be reduced to the desired concentration, and the hollow fiber membrane with the ensured high safety was failed to be produced.

Since the dry heat treatment was not performed in Reference Example 1, approximately 1050 ppm of DMF remained in the hollow fiber membrane. Meanwhile, since the heating temperature in the dry heat treatment was 100°C in Reference Example 2, the effect of removing DMF was higher than that at the heating temperature of 80°C, and the remaining DMF was able to be reduced to the desired concentration even for the heating time of 24 hours.

In addition, the hollow fiber membrane was applied to a hollow fiber membrane module for a water purifier, and a concentration of DMF dissolved from the hollow fiber membrane module was measured. It was evaluated that the hollow fiber membrane having high safety was obtained when the concentration of DMF dissolved from the hollow fiber membrane was 90 ppb or less since a dissolution standard value of DMF is provided as 90 ppb or less in the NSF Certification.

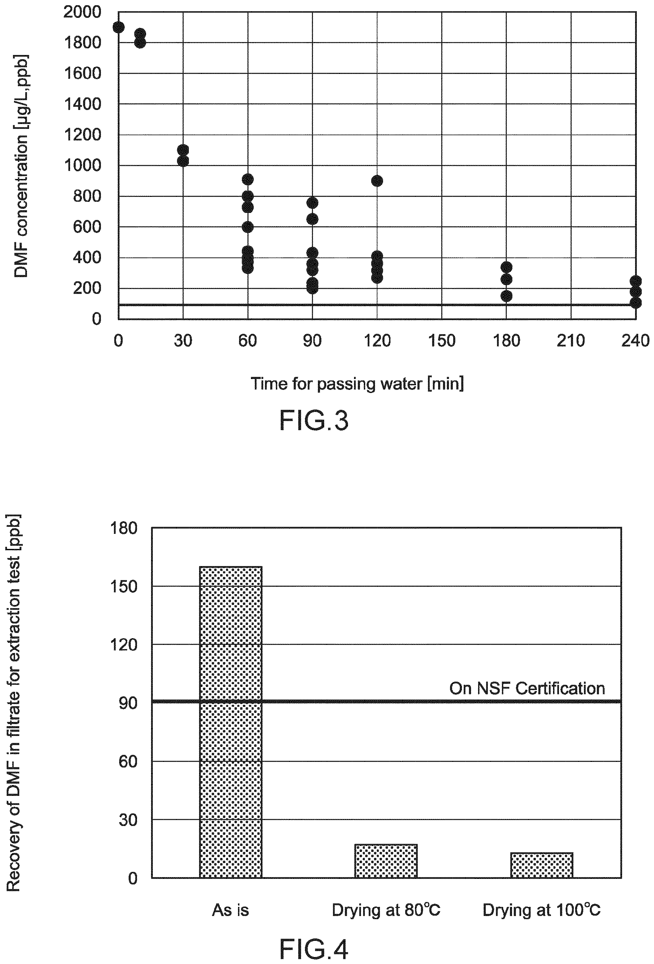

For comparison, a DMF concentration in cases where a washing treatment of passing water (flow rate: 3 L/min) at a certain time was performed instead of the dry heat treatment of the hollow fiber membrane was measured. Fig. 3 shows the results. As shown in Fig. 3, the dissolution standard value of DMF in the NSF Certification (90 ppb or less) was failed to be satisfied even with the water washing for 240 minutes (4 hours) or longer.

The hollow fiber membrane was subjected to each of the dry heat treatment at 80°C for 120 hours and at 100°C for 72 hours, each of the hollow fiber membrane after the dry heat treatment was immersed in a filtrate for a extraction test, and a concentration of DMF recovered from the filtrate was measured. As a reference, a hollow fiber membrane as it is without the dry heat treatment was also immersed in the filtrate for the extraction test to measure the concentration of DMF recovered from the filtrate. Fig. 4 shows the results. As shown in Fig. 4, by performing the dry heat treatment for the hollow fiber membrane, the concentration of DMF dissolved therefrom achieved lower than the dissolution standard value of DMF in the NSF Certification (90 ppb). Therefore, according to the manufacturing method of the present invention, the hollow fiber membrane with lower than the dissolution standard value in the NSF Certification, which is an extremely strict standard as a safety standard in the water purifier field, can be produced, and such a hollow fiber membrane is beneficial for application for the hollow fiber membrane module for a water purifier having high safety and reliability.

## Claims

1. A method for manufacturing a hollow fiber membrane **characterized in that** a spinning stock solution containing 10 mass% or more and 40 mass% or less of a polysulfone-based resin, 1 mass% or more and 30 mass% or less of polyvinylpyrrolidone, and 1 mass% or more and 80 mass% or less of N,N-dimethylformamide is discharged together with a core liquid from a double-ring nozzle to produce a hollow fiber membrane by dry-wet spinning, and then the hollow fiber membrane is subjected to a dry heat treatment at a temperature of 80°C or higher and 100°C or lower for 48 hours or longer and 168 hours or shorter.

2. The method for manufacturing a hollow fiber membrane according to claim 1, wherein the core liquid contains 30 mass% or more and 100 mass% or less of N,N-dimethylformamide.

3. The method for manufacturing a hollow fiber membrane according to claim 1 or 2, wherein the polysulfone-based resin is a polysulfone resin.

4. The method for manufacturing a hollow fiber membrane according to claim 1 or 2, wherein a concentration of N,N-dimethylformamide remaining in the hollow fiber membrane after the dry heat treatment is 10 ppm or less.

5. The method for manufacturing a hollow fiber membrane according to claim 1 or 2, wherein a concentration of N,N-dimethylformamide dissolved from the hollow fiber membrane immersed in water after the dry heat treatment is 90 ppb or less.

6. The method for manufacturing a hollow fiber membrane according to claim 1 or 2, wherein the spun hollow fiber membrane is washed with warm water before the dry heat treatment.
